# EUROPÄISCHE PATENTSCHRIFT

(11) **EP 3 799 592 B1**
(45) Veröffentlichungstag und Bekanntmachung des Hinweises auf die Patenterteilung: **13.04.2022**
(21) Anmeldenummer: 20734493.8
(22) Anmeldetag: 19.06.2020
(51) Int. Cl.: C04B 2/10

(54) **VERFAHREN UND VORRICHTUNG ZUR HERSTELLUNG GEBRANNTER ENDPRODUKTE AUS NATÜRLICHEN, KARBONATHALTIGEN, KÖRNIGEN STOFFEN ALS EDUKT**
METHOD AND DEVICE FOR PRODUCING FIRED END PRODUCTS FROM NATURAL, CARBONACEOUS, GRANULAR MATERIALS AS STARTING MATERIAL
PROCÉDÉ ET DISPOSITIF DE FABRICATION DE PRODUITS FINAUX CALCINÉS À PARTIR DE SUBSTANCES GRANULAIRES NATURELLES CONTENANT DU CARBONE COMME PRODUIT DE DÉPART

(30) Priorität: 21.06.2019 DE 102019209044; 21.06.2019 DE 102019209043
(43) Veröffentlichungstag der Anmeldung: 07.04.2021
(73) Patentinhaber: Litherm Technologies GmbH, 47829 Krefeld (DE)
(72) Erfinder: NELLES, Felix, 47839 Krefeld (DE); STUMPF, Thomas, Dr., 38667 Bad Harzburg (DE)
(74) Vertreter: Winter, Brandl - Partnerschaft mbB
(86) Internationale Anmeldenummer: PCT/EP2020/067186
(87) Internationale Veröffentlichungsnummer: WO 2020/254625

(56) Entgegenhaltungen:
- KR-A- 20050 113 529

## Beschreibung

### Technisches Gebiet

Die vorliegende Offenbarung betrifft ein Verfahren zur Herstellung eines gebrannten Endproduktes aus natürlichen, karbonathaltigen, körnigen Stoffen als Edukt nach Anspruch 1 sowie eine Vorrichtung zur Durchführung dieses Verfahrens nach Anspruch 15.

Karbonathaltige Stoffe, z.B. Kalkstein oder Dolomit verändern durch Erhitzen ihre chemische Zusammensetzung und ihre kristalline Struktur. Bei Temperaturen zwischen etwa 800 und 1.200 °C wird der Kalkstein (CaCO₃) in Kohlendioxid (CO₂) und Calciumoxid (CaO, Branntkalk) zerlegt, dieser Vorgang wird Kalkbrennen bzw. Kalzinieren genannt. Bei Dolomit beginnt der Prozess schon ab etwa 650°C. Je Tonne reinem Kalk (CaO) entstehen zwangsweise und nicht minderbar etwa 785 kg CO₂, das aus dem Mineral CaCO₃ freigesetzt wird. Dieser Anteil kann aufgrund der chemischen Zusammensetzung des CaCO₃ nicht verringert werden.

Darüber hinaus wird bei der Prozesswärmeerzeugung durch die Verbrennung von kohlenstoffhaltigen Brennstoffen ebenfalls CO₂ erzeugt. Abhängig von Brennstoff, dem Ofentyp und der Ofen-Effizienz wird dabei je Tonne Kalk ca. 420 kg CO₂ erzeugt und emittiert. In Summe wird somit je erzeugter Tonne Kalk etwa 1,2 t CO₂ erzeugt und emittiert.

Prinzipiell wird bei konventionellen Kalköfen der Kalk mit Hilfe heißer Verbrennungsgase gebrannt. Durch Beimischung zusätzlicher Luft zum stöchiometrischen Luftbedarf der Verbrennung wird die Temperatur der Verbrennungsgase auf das Niveau eingestellt, dass zur geforderten Kalkqualität nötig ist. Die Abgase aus Kalköfen bestehen vorwiegend aus Stickstoff, Kohlendioxid aus der Verbrennung, Kohlendioxid aus der Kalzinierung, Sauerstoff, Wasserdampf und Staub. Die Produktion von 6,6 Mio. t Kalk und Dolomit pro Jahr (Deutschland 2011) führen somit zu etwa 7,9 Mio. t CO₂ Emissionen pro Jahr. Es wäre sinnvoll, das freigesetzte Kohlendioxid am Ort der Entstehung abzuscheiden und das aus dem Verbrennungsprozess gebildete CO₂ möglichst zu vermeiden. Kohlendioxid aus diesem Gas-Staub-Gemisch zu separieren zu Zwecken der Carbon Capture Utilisation (CCU) bzw. Carbon Capture Storage (CCS) ist nach dem Stand der Technik extrem aufwändig und somit unwirtschaftlich.

Branntkalk wird in vielfältigen Einsatzgebieten, bei Industrieprozessen, bei der Baustoffherstellung und in Umweltanwendungen verwendet. Die Anwendungen stellen je nach Verwendungszweck unterschiedliche Anforderungen an den Branntkalk. Deren Grenzen werden durch immer präziser gefasste Prozesssteuerungen weiter und weiter eingeengt. Diese präzisen Anforderungen betreffen allerdings ein Produkt, dessen Eigenschaften auf Grund seiner natürlichen Herkunft immer gewissen Schwankungsbreiten unterliegen werden, welche von der Entstehungsgeschichte seines Ursprungsmaterials Kalkstein geprägt sind. Den Branntkalk im Hinblick auf seine Anforderungen trotz der natürlichen Variation des Ausgangsmaterials zielgerichtet zu produzieren, erfordert damit eine genaue Kenntnis der Einflussparameter, die aus dem Ausgangsmaterial auf die entstehenden Branntkalk-Eigenschaften wirken.

Die Produktion des Branntkalkes erfolgt durch thermische Dissoziation von Kalkstein (die sog. Calcination) unter Freisetzung von Kohlendioxid:

CaCO₃ + 178,4 kJ → CaO + CO₂ (1)

Wird der produzierte Branntkalk nach Abschluss der Kalzinierung einer weiteren Temperatureinwirkung ausgesetzt, beginnen Sinterprozesse zu wirken, die die physikalischen Eigenschaften des Produktes, wie z. B. spezifische Oberfläche, Rohdichte etc. zum Teil erheblich verändern können. Das Ausmaß dieser Änderungen kann sich dabei je nach Kalkstein deutlich unterscheiden. Diese Sinterprozesse haben einen direkten Einfluss auf die Branntkalkreaktivität als einem der wichtigsten Anforderungsparameter für die Prozesssteuerung von Anwendungen, in denen Branntkalk zum Einsatz kommt. Die Branntkalkreaktivität ist ein Produktparameter, welcher sich auf dieUmsatzgeschwindigkeit des Branntkalkes mit Wasser bezieht. Die Enthalpie der Reaktion

CaO + H₂O → Ca(OH)₂ + 65,19kJ (2)

ist mit ΔHR = -65,19 kJ/mol CaO zwar konstant, allerdings variiert die Geschwindigkeit, mit der die Reaktion abläuft und damit die Geschwindigkeit der Wärmefreisetzung in Abhängigkeit von den physikalischen und chemischen Eigenschaften des Branntkalkes. Die Methode zur Bestimmung der Reaktivität besteht darin, die Zeit t60, zu messen, in der die Temperatur einer Kalk-Wasser-Mischung unter standardisierten Bedingungen von 20 auf 60 °C steigt. Abhängig von der Reaktionsgeschwindigkeit, welche direkt von der Sinterung des Kalkes abhängig ist, werden die Kalke in Hart-, Mittel- und Weichbrannt unterschieden. Allerdings existiert keine exakte Definition zur Abgrenzung der Gruppen. Als Anhaltswerte können bei einem Weichbranntkalk eine Reaktionsdauer von maximal zwei Minuten angenommen werden, während eine Reaktionszeit zwischen zwei und acht Minuten einen Mittelbrannt charakterisiert und Hartbranntkalke einen noch längeren Zeitraum benötigen bis der vollständige CaO-Anteil zu Ca(OH)₂ umgesetzt wurde.

Für das Brennen von Kalk werden in Schachtöfen üblicherweise Kalksteine mit einer Korngröße größer 25 mm eingesetzt, in speziellen Gleichstrom-Gegenstrom-Regenerativ-Öfen (GGR) teilweise größer 10 mm. Typischerweise entsprechen diese Körnungsgrößen nur 40-55% eines Kalksteinvorkommens. In Drehrohröfen können üblicherweise Kalksteine größer 2mm eingesetzt werden, bedingt durch die Verfahrensweise mit dem erheblichen Nachteil eines deutlich höheren Brennstoffbedarfs und damit auch mit einem entsprechend höheren CO₂ Ausstoß.

Der aus den Lagerstätten gewonnene Kalksteinanteil mit Korngrößen kleiner 20 mm kommt zu einem großen Anteil als ungebranntes Produkt z. B. in Rauchgasentschwefelungsanlagen zum Einsatz oder sofern das Material nicht anderweitig brauchbar ist, wird es beispielsweise in den Tagebau zurückgefahren. Durch den immer größeren Anteil der erneuerbaren Energien im deutschen Strom-Mix, dem Kohle-Ausstieg und der Umsetzung von Klimaschutzzielen ist davon auszugehen, dass der Absatz an feinem Kalkstein für Rauchgasentschwefelungsanlagen in absehbarer Zeit entsprechend wegfallen wird. Ein verantwortungsvoller Umgang mit den wertvollen, natürlichen Kalksteinvorkommen muss zukünftig auch das wirtschaftliche Brennen dieser kleinen Körnungen vorsehen.

Maßnahmen im Kalk-Brennprozess zur Energieeffizienz werden seit Beginn des Kalkbrennens weiterentwickelt. Insbesondere die ausgeklügelte Verschaltung von heißen und kalten Stoffströmen in GGR Öfen (Gleichstrom-Gegenstrom-Regenerativ-Öfen) führen zu spezifischen Energieverbräuchen, die sich mit dem technischem Fortschritt immer weiter dem thermodynamischen Minimum nähern. Aufgrund des hohen Wärmerückgewinnungsgrades von beispielsweise GGR-Öfen spielt eine Absenkung der Brenngastemperatur eine untergeordnete Rolle. Genauso verhält es sich mit dem Durchsatz; eine Erhöhung des Durchsatzes senkt auf Grund des hohen Wärmerückgewinnungsgrades nicht signifikant den spezifischen Energieverbrauch. So lässt sich auch erklären, dass die Vorteile der Kalzininerung mit Unterstützung von Wasserdampf, die bereits 1917 in "Das Kalkbrennen im Schachtofen mit Mischfeuerung", Berthold Block, Springer-Verlag 1917) beschrieben wurde, keine wesentliche produktionstechnische Relevanz erlangt hat.

GGR-Öfen, wie sie aus DE 30 38 927 C2 und DE102016103937A1 bekannt sind, und zumeist zum Brennen von karbonathaltigem Rohgut, insbesondere Kalkstein, Dolomit oder Magnesit genutzt werden, arbeiten zyklisch, wobei ein Brennen des Brennguts stets nur in einem der Schächte erfolgt, während der andere Schacht als Regenerativschacht arbeitet, in dem das dortige Brenngut beziehungsweise Rohgut mittels des über den Überströmkanal aus dem aktuell brennbetriebenen Schacht zugeführten Abgases für den sich anschließenden Brennzyklus in diesem Schacht vorgewärmt wird. Das Brennen des Brennguts in dem brennbetriebenen Schacht erfolgt im Gleichstrom, indem das schwerkraftbedingt von oben nach unten durch den brennbetriebenen Schacht geförderte Brenngut mit Brenngas durchströmt wird, das von am oberen Ende der Schächte angeordneten Brennern erzeugt wird. Eine Durchströmung des Brennguts in dem nicht-brennbetriebenen beziehungsweise regenerativ betriebenen Schacht erfolgt dagegen im Gegenstrom, wobei das über den häufig zwischen der vertikalen Mitte und dem unteren Drittel der Schächte angeordneten Überströmkanal zugeführte Abgas am oberen Ende des regenerativ betriebenen Schachts abgeführt wird. Konventionelle GGR-Öfen eignen sich wegen der relativ langen Verweilzeit des Brennguts in der Brennzone in Kombination mit den relativ geringen Brenntemperaturen von üblicherweise zwischen 800°C und 1000°C vorteilhaft für die Herstellung von Branntkalk mit hoher Reaktivität, sogenanntem Weichbrannt-Kalk. Nicht gut geeignet sind diese jedoch für die Herstellung von Branntkalk mit niedriger Reaktivität, sogenanntem Hartbrannt-Kalk, und zudem die für das Erzeugen von Hartbrannt-Kalk erforderliche Sinterung, für die Brenntemperaturen deutlich über 1000°C (beispielsweise ca. 1700°C) erforderlich sind. Hier versinntert dann das Brenngut infolge der für GGR-Öfen typischen relativ langen Verweilzeit in der Brennzone zu Klumpen, die u.a. zu einem Verstopfen des Ofens führen können. Hinzu kommt, dass in konventionellen GGR-Öfen im Anfangsabschnitt der unterhalb des Überströmkanals gelegenen Kühlzone des brennbetriebenen Schachts eine teilweise Rekarbonisierung des Brennguts infolge der relativ intensiven Durchströmung mittels des aus der Brennzone kommenden Rauchgases kommt, das in diesem Bereich des brennbetriebenen Schachts in Richtung des Überströmkanals umgelenkt wird. Für das Brennen einer Tonne Kalk im bilanzierten GGR-Ofen werden rund 3645 MJ/t benötigt. Als Brennstoff wird in der Regel Erdgas verwendet; auch Braunkohlestaub mit nachteilig höheren CO₂ Emissionen. Neben dem Brennstoffbedarf besteht für den Betrieb des Ofens noch ein Strombedarf von ca. 80 MJ/t Branntkalk. (Quelle: http://www.probas.umweltbundesamt.de/php/prozessdetails.php?id=%7B86C6457F-ABF7-4F8C-803E-794F6EBCB973%7D; (3.2.2016)

Um mit einem Wirbelbett bzw. Fließbettverfahren (siehe am gleichen Tag hinterlegte Anmeldung FN0701P-DE) gegenüber etablierten Verfahren wie dem GGR-Öfen energetisch konkurrieren zu können, bedarf es neben einem überzeugendem technischen und ökologisch nachhaltigem Konzept auch Verfahren und Vorrichtungen, die die energetische Effektivität soweit erhöhen, dass die spezifischen Energie-Verbräuche zu denen von GGR Öfen konkurrenzfähig sind.

Aus der DE1767628A, DE69029037T2 und der DE2641292C2 sind allgemein Verfahren zur Durchführung endothermer Prozesse mit körnigem Edukt in einer Wirbelschicht bekannt. Bei der EP0501542B1 handelt sich um ein Verfahren zum Rösten von refraktären Goldärzen mittels einer Wirbelschicht. Nachteilig bei diesen bekannten Verfahren ist es, dass durch die Wäremzufuhr mittels direkter Verbrennung in der Wirbelschicht Verbrennungsprodukte mit den Edukten und Produkten in Kontakt geraten.

Aus der KR 2005 0113529 A ist ein Verfahren und eine Vorrichtung zur Herstellung gebrannter Endprodukte aus natürlichen, karbonathaltigen, körnigen Stoffen bei der der Energieeinsatz durch Wärmerückgewinnung aus den entstehenden Gasen verringert wird. Allerdings erfolgt die Zufuhr der notwendigen Energie durch direkte Verbrennung im Fließbett des Kalzinierers, so dass die gebrannten Endprodukte durch Verbrennungsrückstände verunreinigt werden.

Ausgehend von der KR 2005 0113529 A ist es daher Aufgabe der Erfindung, ein Verfahren zur Herstellung eines gebrannten Endproduktes, wie Kalk und Zement, mit möglichst wenig Verunreinigungen aus natürlichen, karbonathaltigen, körnigen Stoffen als Edukt sowie eine Vorrichtung zur Durchführung dieses Verfahrens anzugeben.

Die Lösung dieser Aufgabe erfolgt durch die Merkmale des Anspruchs 1 bzw. 15.

Durch die Kopplung einer wasserdampfunterstützten Fluidisierung zur Kalzinierung karbonathaltiger Stoffe mit einer im Wärmerückgewinnungsprozess integrierten Dampferzeugereinheit kann hochenenergieeffizient Kalk gebrannt werden. Wasser im Fluidisierungsmedium senkt den CO₂ Partialdruck in einer ersten Reaktionszone, dadurch beginnt die Kalzinierung schon bei geringeren Temperaturen. Das wiederum hat den Vorteil, dass weniger Energie zur Kalzinierung aufgewendet werden muss, da die Edukte bzw. Produkte auf eine geringere Reaktionstemperatur erwärmt werden müssen. Das reduziert die Energiezufuhr und erhöht die Effizienz des Prozesses. Je höher der Anteil des Wasserdampfes im Fluidisierungsmedium ist, desto geringer ist der CO₂ Partialdruck und desto schneller läuft die thermische Dissoziation ab. Würde CO₂ als Fluidisierungsmedium verwendet werden, so wäre keine aufwändige Gastrennung nötig, allerdings würde der Aufwand für die Wärmerückgewinnung erheblich sein. Die indirekte Wärmeübertragung bzw. Beheizung der Reaktionszone durch Einbauten in der Reaktionszone wird ein direkter Kontakt zwischen Brennstoff, Abgas und dem Produkt - fest oder gasförmig - verhindert, so dass das Produkt nicht verunreinigt wird. Das ist bei konventionellen Kalkbrennprozessen anders, da dort einerseits die Abgase durch das Produkt strömen und somit Produktkontakt haben und andererseits das Brennen von Hartbrannt sehr enge Anforderungen an die Brennstoffspezifikation hat. Der Vorteil der vorliegenden Erfindung liegt darin, dass mit einer Vielzahl von Brennstoffen die gewünschten Kalkqualitäten erzeugt werden können. Des Weiteren besteht bei der Erfindung kein Kontakt zwischen Abgas bzw. Brennstoff und dem Edukt bzw. Produkt, sodass der Brennstoff beispielsweise auch Klärschlamm enthalten kann.

Durch die Nutzung von Wasserdampf als Fluidisierungsmedium, können heiße wasserdampfhaltige Produktströme und Abgasströme ihre Wärme auf den Prozesswasser-Kreislauf übertragen und zur Erwärmung oder Dampferzeugung genutzt werden. Durch den Einsatz des so erzeugten Fluidisierungsmediums gelangt die durch Wärmerückgewinnung erhaltene Energie wieder in die Reaktionszone. Ein entscheidendes Kriterium zum wirtschaftlichen Erfolg ist die thermische Effizienz des Prozesses. Gleichstrom-Gegenstrom Reaktorprozesse oder Schachtofenprozesse sind thermisch hocheffiziente Prozesse, die sich bauartbedingt bzw. prozessführungsbedingt nahe am theoretischen Effizienzmaximum bewegen. Die Effizienz des Wirbelschichtprozesses muss zur Effizienzverbesserung durch eine Wärmerückgewinnung unterstützt werden.

Die Kondensation nach Anspruch 2 stellt ein effizientes und einfaches Verfahren zur CO₂-Abscheidung und Wärmerückgewinnung dar. Wasserdampf und CO₂ aus dem Kalkstein verlassen die erste Reaktionszone als Gemisch. Würde Luft als Fluidisierungsmedium verwendet werden, so wäre der verfahrenstechnische Aufwand immens, um CO₂ aus der Luft abzuscheiden. Der Wasserdampf kann einfach durch Kondensation abgeschieden werden. Gleichzeitig ist die Kondensation eine hocheffiziente Methode um Wärme aus dem Prozess zurückzugewinnen. Die Zielstellung bei dem Prozess auch aufkonzentriertes CO₂ zu erhalten, wird durch diese Vorgehensweise technologisch stark vereinfacht und wirtschaftlich attraktiv. Das hochkonzentrierte CO2 kann als Produkt genutzt werden. Würden andere Gase wie Luft oder Rauchgase zur Fluidisierung eingesetzt werden, so müsste CO₂ aufwändig, d.h. energieintensiv, abgeschieden werden, wie beispielsweise mittels Druckwechseladsorption, chemischen bzw. physikalischen Wäschen,etc. Bei der vorliegenden Erfindung entfällt diese CO₂ Aufkonzentrierung.

Gemäß der vorteilhaften Ausgestaltung nach Anspruch 3 wird das kondensierte, heiße Wasser erneut für die Fluidisierung verwendet. Einerseits entfällt dadurch die Erwärmung von Frischwasser auf die Kondensat-Temperatur, andererseits sinkt dadurch der Frischwasserbedarf des Prozesses, was sich positiv auf die Ökobilanz und auf die Wirtschaftlichkeit auswirkt.

Die in den Ansprüchen 4 und 6 genannten Temperaturbereiche für die Reaktionszonen haben sich als vorteilhaft herausgestellt.

Gemäß der vorteilhaften Ausgestaltung nach Anspruch 6 können sowohl fest, gasförmige, flüssige Brennstoffe und oder Strom zur Prozesswärmeerzeugung eingesetzt werden.

Die Regelenergie im öffentlichen Stromnetz wird auch Regelleistung genannt und gleicht als Reserve Schwankungen im Stromnetz, genauer gesagt der Stromnetzfrequenz, aus. Ins Stromnetz kann bei Regelenergieeinsatz sowohl Strom entnommen als auch zusätzlich eingespeist werden. Mehr Stromeinspeisung zum Ausgleich einer zu niedrigen Netzfrequenz wird als positive Regelenergie, die Drosselung der Einspeisung zur Senkung der Netzfrequenz als negative Regelenergie bezeichnet. Teilnehmer am Regelenergiemarkt müssen die vereinbarte Regelenergie vorhalten. Vergütet wird die Bereitschaft und im Falle der Inanspruchnahme der Regelenergie auch der tatsächliche Einsatz. Industrielle Prozesse, die in der Lage sind die Kriterien zur Teilnahme am Regelenergiemarkt zu erfüllen, haben einen wirtschaftlichen Vorteil. Bedingt durch den Einsatz von Strom zur Prozesswärmeerzeugung und die Möglichkeit Brennstoffe zusätzlich oder ausschließlich zur Prozesswärmeerzeugung einzusetzen, eignet sich der hier beschriebene Prozess dazu am Regelenergiemarkt teilzunehmen.

Die indirekte Wärmeübertragung mittels Wärmerohren nach Anspruch 7 verhindert den Kontakt zwischen Brennstoff, Abgas und dem Produkt - fest oder gasförmig, so dass das Produkt nicht verunreinigt wird. Der Wärmeübergang von Wärmerohren ist höher als bei Rauchgaswärmeübertragern und ermöglicht dadurch kompakte Reaktordimensionen und diesbzgl. geringere Investitionskosten.

Durch die Trennung von Kalzinierung und Sinterung nach Anspruch 5 bzw. 10 ist eine exakte Einstellung der Bedingungen für das Kalzinieren und für das Sintern möglich. Während GGR-Öfen prozessbedingt Schwierigkeiten haben Hartbrannt herzustellen, ist dies bei der vorliegenden Erfindung möglich. Während im ersten Reaktorbehälter - erste Reaktionszone - die Prozess-Bedingungen auf eine schnelle thermische Dissoziation abgestimmt sind, so sind die Prozess-Bedingungen im zweiten Reaktorbehälter, der Sinterkammer - zweite Reaktionszone, auf das Veredeln des Produktes zu einem Mittel- oder Hartbrannt ausgerichtet, also t60-Wert. Das bedeutet für den ersten Reaktorbehälter, dass der Wärmeeintrag in das Edukt hoch und der Kohlendioxid-Partialdruck gering sein muss. In der Sinterkammer muss das Produkt zunächst auf die Sintertemperatur erhitzt werden und je nach Anforderung an den t60 Wert entsprechend lang bei dieser Temperatur verweilen. Eine Fluidisierung ist dazu nicht zwingend nötig. Vorwärmung, Kalzinierung und Wärmerückgewinnung müssen nicht zwingend in drei separaten Reaktoren erfolgen, sie können auch nacheinander geschaltet innerhalb des ersten Reaktorbehälters in entsprechenden aufeinanderfolgenden Reaktionszonen erfolgen.

Gemäß der bevorzugten Ausführungsformen nach Anspruch 8 und 9 werden die in der zweiten Reaktionszone entstehenden heißen Endprodukte und heißen Gase abgeleitet und die darin enthaltene Wärme wird gemäß Verfahrensschritt e) in Anspruch 1 zur Vorwärmung genutzt.

Bei der konventionellen Herstellung von Kalk oder Dolomit wird je Produktklasse (Weich-, Mittel- oder Hartbrannt) üblicherweise nur ein Ofentyp eingesetzt. Bei der vorliegenden Erfindung können mit einem Aggregat alle Typen nach Kundenbedarf erzeugt werden und Produktumstellungen (Typen) sind aufgrund der kurzen Durchlaufzeiten von wenigen Minuten bis Stunden deutlich geringer als bei konventionellen Öfen (>10h). Produktumstellungen sind daher innerhalb weniger Stunden möglich - Anspruch 10.

Durch den Einsatz von agglomerierten Edukten gemäß Anspruch 11 lassen sich mit dem erfindungsgemäßen Verfahren Zement und hydraulischer Kalk herstellen. Agglomeration ist ein Sammelbegriff für die Verfahren zur Kornvergrößerung durch Zusammenfügen von Körnern. Agglomeration wird in erster Linie bei feinkörnigen oder pulverförmigen Edukten angewendet, um die Rieselfähigkeit und damit die Bearbeitbarkeit zu verbessern. Sehr feinkörnige Pulver haben oft eine äußerst geringe Schüttdichte, lassen sich leicht aufwirbeln, neigen zum Anhaften an Oberflächen usw. Durch Agglomeration verbunden Pulverteilchen sind erheblich besser handhabbar und leichter verarbeitbar. Bei der vorliegenden Erfindung wird die Tatsache genutzt, dass durch Mischung der Ausgangsstoffe, die chemische Zusammensetzung bei Agglomeraten sehr genau eingestellt werden. Bedingt durch die vordefinierte Mischung und die durch die Agglomeration herbeigeführten bzw. erzwungenen Kontaktflächen und Kontaktpunkte zwischen den einzelnen Mischungsbestandteilen wird eine Mineralbildung ermöglicht, ohne dass die Mischung aufgeschmolzen werden muss, wie es bei der Zementherstellung in Drehrohröfen der Fall ist. Vorteilhaft ist die Vermeidung der energieintensiven Schmelze der Mischung und damit der energieeffizienten Mineralbildung bei Einsatz von Rohmaterialien gemäß Anspruch 11. Die Agglomeration erfolgt vorzugsweise durch Pelletierung oder Brikettierung - Anspruch 12.

Gemäß Anspruch 13 ist es vorteilhaft Edukte mit Wassergehalten bis zu 20 Gew. % für die Agglomerate einzusetzen um bei bei Temperaturen größer 100°C durch Wasserverdampfung bedingten Abplatzungen Zerfall des Agglomerats zu minimieren.

Aufgrund der erzwungenen Mischung und Kontaktflächen bzw. Kontaktpunkte innerhalb eines Agglomerats ist eine Aufschmelzung des Agglomerats zur Mineralbildung bei Einsatz von Rohmaterialien gemäß Anspruch 11 nicht zwingend nötig aber bei Temperaturen Nahe des Schmelzpunktes einzelner Rohmaterialien nicht prinzipiell vermeidbar. Es ist daher vorteilhaft den Anteil der Schmelze kleiner 20 Gew.% zu halten, um Verklumpungen mehrerer angeschmolzener Agglomerate zu vermeiden aber insbesondere aus Energieeffizienzgründen - Anspruch 14.

Dadurch, dass bei der Vorrichtung nach Anspruch 15 der erste Reaktorbehälter mit der ersten Reaktionszone und die Prozesswärme-Erzeugungseinrichtung räumlich und stofflich voneinander getrennt sind, können die Prozessparameter bei der Verbrennung jederzeit verbrennungsoptimiert eingestellt werden. Bei konventionellen Brennprozessen ist dies nicht der Fall; insbesondere bei Hartbrannt. Die bei üblichen Verbrennungsprozessen im Brennprozess entstehende Stickoxide (NOx) sowie leichtflüchtige Kohlenwasserstoffe werden durch die separate Verbrennung ebenfalls reduziert. Die bei üblichen Verbrennungsprozessen im Brennprozess entstehenden Stickoxide (NOx) sowie leichtflüchtige Kohlenwasserstoffe werden beim Einsatz von Strom zur Prozesswärmeerzeugung sogar gänzlich vermieden. Substituiert Strom Brennstoff, dann wird für diese Energiemenge an der Anlage kein Abgas emittiert. Basiert der Strom auf erneuerbaren Energien, so sinkt der CO₂ Footprint dementsprechend, d.h. der Anteil des substituierten Brennstoffs sinkt auf Null.

Vorteile der Wasserdampffluidisierung:
- Die Absenkung des Kohlendioxid-Partialdrucks im Kalzinierreaktor führt zur schnelleren Kalzinierung bei gleichzeitiger Absenkung der Kalziniertemperatur dadurch wird der Energieaufwand verringert, bei gleichzeitig höherem Durchsatz.
- Es sind hohe Kalzinierungsgrade erreichbar.
- Wasserdampf als Fluidisierungsmedium kann durch Kondensation zurück in den Prozess geführt werden.
- Die Trennung von Fluidisierungsmedium und CO₂ aus der Kalzinierung durch Kondesation ist technisch einfach umzusetzen und effizient. Dadurch sind sehr hohe Reinheitsgrade bei CO₂ möglich, das dann wiederum als Produkt genutzt werden kann. Damit gelingt es mit der vorliegenden Erfindung diesen CO₂ intensiven Prozess CO₂ neutral zu gestalten.

Beim Anfahren bzw. Aufheizen und Abfahren bzw. Abkühlen des Eduktes bzw. des Produktes kommt es beim Einsatz von Wasserdampf als Fluidisierungsmedium zur Kondensation. Kondensat und bereits gebranntes Material reagieren zu dem ungewünschten Produkt Kalkhydrat. Zum Anfahren und Abfahren des Prozesses kann es vorteilhaft sein, statt Wasserdampf CO2 und/oder Luft einzusetzen.

Weitere Einzelheiten, Merkmale und Vorteile der Erfindung ergeben sich aus der nachfolgenden Beschreibung bevorzugter Ausführungsformen.

### Kurzbeschreibung der Figuren

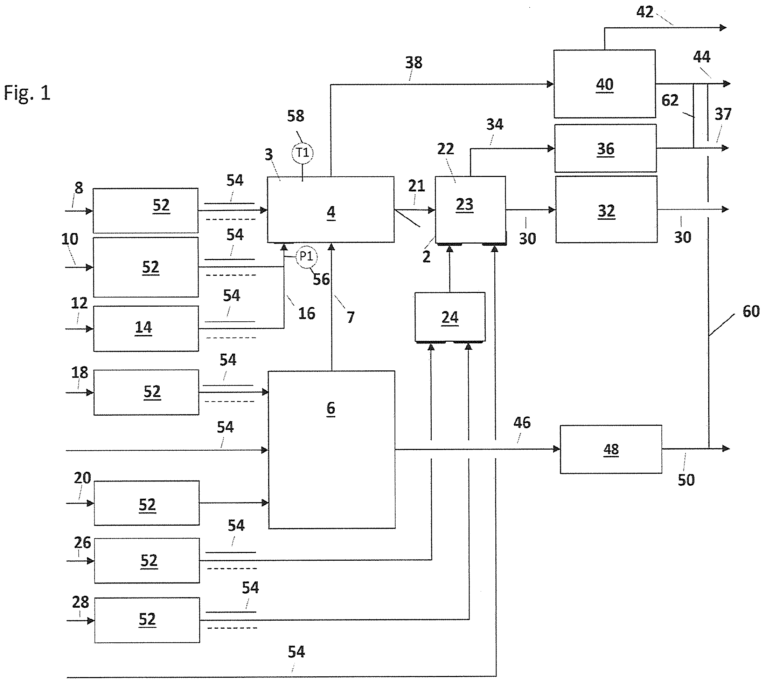

Fig. 1 zeigt eine schematische Darstellung einer beispielhaften Ausführungsform der Erfindung.

Die beispielhafte Ausführungsform nach Fig. 1 umfasst einen Kalzinierer 2 mit einem ersten Reaktorbehälter 3 zur Herstellung von Branntkalk aus Kalkstein. In dem ersten Reaktorbehälter 3 ist eine erste Reaktionszone 4 in Form einer Wirbelschicht ausgebildet. Durch eine Prozesswärme-Erzeugungseinrichtung 6 wird die Wärme bereitgestellt, die zum Aufheizen der Reaktionszone 4 und zum Kalzinieren benötigt wird. Die Wärme aus der Prozesswärme-Erzeugungseinrichtung 6 wird mittels einer Wärmetransfereinrichtung 7 in den ersten Reaktorbehälter 3 eingekoppelt. Über eine Edukt-Zuleitung 8 wird feinkörniger Kalkstein dem ersten Reaktorbehälter 3 mit der ersten Reaktionszone 4 in Form einer Wirbelschicht zugeführt. Über eine Fluidisierungsmedium-Zuleitung 10 wird CO₂ und/oder Luft zum An- bzw. Abfahren als Fluidisierungsmedium zum Ausbilden der Wirbelschicht 4 zugeführt. Über eine Zuleitung 12 werden einem Dampferzeuger 14 Wasser oder Wasserdampf zugeführt. Der im Dampferzeuger 14 erzeugte Dampf wird über eine Dampfleitung 16 dem ersten Reaktorbehälter 3 mit der Wirbelschicht 4 zugeführt. Über eine erste Brennstoffzuleitung 18 wird der Prozesswärme-Erzeugungseinrichtung 6 Brennstoff zur Erzeugung der notwendigen Prozesswärme für den ersten Reaktorbehälter 3 zugeführt. Über eine erste Gaszuleitung 20 wird der Prozesswärme-Erzeugungseinrichtung 6 Luft, O₂ und/oder CO₂ zugeführt.

Der erste Reaktorbehälter 3 ist über eine Zwischenproduktleitung 21 mit einem zweiten Reaktorbehälter in Form einer Sinterkammer 22 mit einer zweiten Reaktionszone 23 verbunden. In der Sinterkammer 22 wird das im ersten Reaktorbehälter 3 kalzinierte Edukt einem Sinterungsprozess unterzogen. Die hierfür notwendige Wärme wird durch eine Brennkammer 24 bereitgestellt, der über eine zweite Gasleitung 26 O₂-haltiges Gas und über eine zweite Brennstoffzuleitung 28 Brennstoff zugeführt wird. Das heiße Endprodukt wird über eine Produktausleitung 30 aus der Sinterkammer 22 abgezogen und in einer ersten Wärmerückgewinnungseinrichtung 32 gekühlt. Das gekühlte Endprodukt wird über die Produktausleitung 30 abgeführt. Heiße Gase aus der Sinterkammer 22 werden über eine erste Gasableitung 34 aus der Sinterkammer 22 abgeführt und durchlaufen eine zweite Wärmerückgewinnungseinrichtung 36. Die gekühlten Abgase werden über eine erste Abgasleitung 37 an die Atmosphäre abgegeben. Heiße Gase aus dem ersten Reaktorbehälter 3 werden über eine zweite Gasableitung 38 abgezogen und in einer dritten Wärmerückgewinnungseinrichtung 40 in Form eines Kondensators gekühlt, wodurch CO₂-Gas abgeschieden wird. Über eine Kondensatableitung 42 wird entstehendes Kondensat aus dem Kondensator 40 abgeleitet. Über eine CO₂-Ableitung 44 wird das abgetrennte CO₂ aus dem Kondensator 40 ausgeleitet. Abgase aus der Prozesswärme-Erzeugungseinrichtung 6 werden über eine dritte Gasableitung 46 einer vierten Wärmerückgewinnungseinrichtung 48 zugeführt und gekühlt. Die gekühlten Abgase werden über eine zweite Abgasleitung 50 abgeführt.

Die in den Wärmerückgewinnungseinrichtungen 32, 36, 40, 48 rückgewonnene Wärme wird zur Vorwärmung der Edukte, des Fluidisierungsmediums, der Brennstoffe und der O₂-haltigen Gase genutzt. Hierzu durchlaufen die Eduktzuleitung 8, die Fluidisierungsmedium-Zuleitung 10, die Zuleitung für Wasser/Wasserdampf 12, die Brennstoffzuleitungen 18, 28, die Gaszuleitungen 20, 26 jeweils Vorwärmer 52 bzw. den Dampferzeuger 14 in die die in den Wärmerückgewinnungseinrichtungen 32, 36, 40, 48 rückgewonnene Wärme eingekoppelt wird (um die Zeichnung nicht zu überlasten ist dies zeichnerisch nicht dargestellt). Den Vorwärmern 52 und dem Dampferzeuger 14 sind elektrische Heizeinrichtungen 54 nachgeschaltet, um Edukte, Fluidisierungsmedium, Wasserdampf, Brennstoff und O₂-haltige Gase zusätzlich heizen zu können. Auch die Prozesswärmeerzeugungs-Einrichtung 6 und die Sinterkammer 22 lassen sich über elektrische Heizeinrichtungen 54 direkt beheizen. In der Fluidisierungsmedium-Zuleitung 10 bzw. der Dampfleitung 16 ist unmittelbar vor dem ersten Reaktorbehälter 3 eine erste Druckmesseinrichtung 56 angeordnet. Über eine erste Temperaturmesseinrichtung 58 wird die Temperatur in der ersten Reaktionszone 4 des ersten Reaktorbehälters 3 überwacht.

Zunächst wird der körnige Kalkstein in der Wirbelschicht 4 des ersten Reaktorbehälters 3 mindestens bis zu der Temperatur erwärmt, ab der die Kalzinierung beginnt. Die dazu nötige Wärme wird aus der Prozesswärme-Erzeugungseinrichtung 6 mittels der Wärmetransfereinrichtung 7 direkt oder indirekt in die Wirbelschicht 4 eingekoppelt. Durch diese Wärmezufuhr entsteht aus Kalkstein allmählich das Produkt Branntkalk. Das bei der Kalzinierung entstehende CO₂, staubförmiger Branntkalk, sonstige Rückstände sowie das Fluidisierungsgas werden über die zweite Gasableitung 38 aus dem ersten Reaktorbehälter 3 abgeführt. Das Produkt, Branntkalk (CaO), wird über die Zwischenproduktleitung 21 entweder in Form eines Überlaufs oder eines Abzugs aus dem ersten Reaktorbehälter in die Sinterkammer 22 überführt.

Sofern in der Prozesswärme-Erzeugungseinrichtung 6 kohlenstoffhaltiger Brennstoff und als Oxidationsmittel O₂ ggf. mit CO₂ verdünnt eingesetzt wird, dann besteht das Abgas aus der Prozesswärme-Erzeugungseinrichtung 6 vorwiegend aus CO₂. In diesem Fall kann das im Wesentlichen aus CO₂ bestehende Abgas in der zweiten Abgasleitung 50 zusammen mit dem CO₂-Gas in der CO₂-Ableitung 44 als CO₂-Produkt weiterverwendet werden. Dies ist durch eine erste Verbindungsleitung 60 zwischen der zweiten Abgasleitung 50 und der CO₂-Ableitung 44 angedeutet. Das CO₂ in der dritten Gasleitung 46 kann auch als Teil des Fluidisierungsmediums für die Wirbelschicht 4 eingesetzt werden (nicht dargestellt).

Sofern das Abgas der Brennkammer 24 hochkonzentriertes CO₂ ist kann es ebenfalls als Produkt dem CO₂ Produktstrom 44 über eine zweite Verbindungsleitung 62 zugeführt werden.

Die Betriebsweise des Wirbelschicht-Kalzinieres 2 kann grundsätzlich im Batch-Betrieb, kontinuierlich oder im Semi-Batch-Betrieb erfolgen. Vorwärmung, Kalzinierung und Wärmerückgewinnung müssen nicht zwingend drei separate Reaktoren sein, sie können sich auch nacheinander geschaltet innerhalb eines Reaktors als entsprechende Zonen befinden.

Durch Veränderung der Verweilzeit und oder der Temperatur im Kalzinierer 2 kann das Endprodukt gezielt beeinflusst und somit Weich-, Mittel- oder Hartbrand erzeugt werden. Die Temperatur in dem Kalzinierer 2 lässt sich durch Zugabe von O₂ in der Brennkammer der Prozesswärme-Erzeugungseinrichtung 6 oder durch elektrische Beheizung des Fluidisierungsgases in der Wirbelschicht 4 erhöhen und somit auch Mittel- und Hartbrannt erzeugen.

Je nach chemischer Zusammensetzung der Edukte und gewünschter Zielqualität (t60 Wert bzw. Sintergrad) können höhere und oder längere Verweilzeiten notwendig sein als sie in der ersten Reaktionszone 4 ermöglicht werden können. Die Verweilzeiten und Temperaturen im Sinterbehälter 22 bzw. der zweiten Reaktionszone 23 werden entsprechend dieser Anforderungen eingestellt.

Mit der Vorrichtung nach Fig. 1 lassen sich auch Zement und hydraulischer Kalk Edukt herstellen, wenn als Edukte agglomerierten Rohmaterialien Siliziumoxid, Aluminiumoxid, Eisen(III)-Oxid sowie Calciumcarbonat und/oder Calciumoxid eingesetzt werden. Bei agglomerierten Edukten in Form von Pellets weisen diese einen Durchmesser zwischen kleiner 10,0 cm auf, bei agglomerierten Edukten in Form von Briketts weisen diese eine Kantenlänge kleiner 30,0 cm auf.

### Bezugszeichenliste:

- 2: Kalzinierer
- 3: erster Reaktorbehälter
- 4: erste Reaktionszone, Wirbelschicht
- 6: Prozesswärme-Erzeugungseinrichtung
- 7: Wärmetransfereinrichtung
- 8: Eduktzuleitung
- 10: Fluidisierungsmedium-Zuleitung
- 12: Zuleitung für Wasser/Wasserdampf
- 14: Dampferzeuger
- 16: Dampfleitung
- 18: erste Brennstoffzuleitung
- 20: erste Gaszuleitung
- 21: Zwischenproduktleitung
- 22: zweiter Reaktorbehälter, Sinterkammer
- 23: zweite Reaktionszone
- 24: Brennkammer
- 26: zweite Gaszuleitung
- 28: zweite Brennstoffzuleitung
- 30: Produktableitung
- 32: erste Wärmerückgewinnungseinrichtung
- 34: erste Gasableitung
- 36: zweite Wärmerückgewinnungseinrichtung
- 37: erste Abgasleitung
- 38: zweite Gasableitung
- 40: dritte Wärmerückgewinnungseinrichtung, Kondensator
- 42: Kondensatableitung
- 44: CO₂-Ableitung
- 46: dritte Gasableitung
- 48: vierte Wärmerückgewinnungseinrichtung
- 50: zweite Abgasleitung
- 52: Vorwärmer
- 54: elektrische Heizeinrichtungen
- 56: erste Druckmesseinrichtung
- 58: erste Temperaturmesseinrichtung
- 60: erste Verbindungsleitung zwischen 50 und 44
- 62: zweite Verbindungsleitung zwischen 37 und 44

## Patentansprüche

1. Verfahren zur Herstellung gebrannter Endprodukte aus natürlichen, karbonathaltigen, körnigen Stoffen als Edukt, mit den Verfahrensschritten:
a) Ausbilden einer ersten Reaktionszone (4) in Form einer Wirbelschicht oder eines Fließbettes mit dem Edukt und einem Fluidisierungsmedium;
b) Aufheizen der ersten Reaktionszone (4) durch indirekte Wärmeübertragung mittels Einbauten in der ersten Reaktionszone (4) auf wenigstens einen oder mehrere vorbestimmte Temperaturbereiche über eine vorbestimmte Verweilzeit zum Brennen des Edukts in der ersten Reaktionszone (4);
c) Ausleiten von in der ersten Reaktionszone (4) entstehenden heißen Gasen, die CO₂ und Wasserdampf enthalten, aus der ersten Reaktionszone (4);
d) Ausleiten des heißen Endproduktes aus der ersten Reaktionszone (4) nach der vorbestimmten Verweilzeit; und
e) Nutzung der in den heißen Gasen und/oder dem heißen Endprodukt aus der ersten Reaktionszone enthaltenen Wärme zur Vorwärmung des Edukts und/oder des Fluidisierungsmediums,
wobei als Fluidisierungsmedium Wasserdampf verwendet wird.

2. Verfahren nach einem der vorhergehenden Ansprüche, **dadurch gekennzeichnet, dass** bei dem heißen Gas aus der ersten Reaktionszone (4) die Wärmerückgewinnung durch Kondensation des in dem heißen Gas enthaltenen Wasserdampfes erfolgt und dass durch die Kondensation eine stoffliche Trennung von CO₂ erfolgt.

3. Verfahren nach Anspruch 2, **dadurch gekennzeichnet, dass** das bei der Kondensation erhaltene Wasser wieder zur Erzeugung von Wasserdampf für das Fluidisierungsmedium genutzt wird.

4. Verfahren nach einem der vorhergehenden Ansprüche, **dadurch gekennzeichnet, dass** in der ersten Reaktionszone (4) ein oder mehrere vorbestimmte Temperaturbereiche zwischen 380°C und 1200 °C eingestellt werden können.

5. Verfahren nach einem der vorhergehenden Ansprüche, **dadurch gekennzeichnet, dass** eine zweite Reaktionszone (23) vorgesehen ist in der mittels Einbauten ein oder mehrere vorbestimmte Temperaturbereiche zwischen 400°C und 1600°C, insbesondere zum Sintern, eingestellt werden können.

6. Verfahren nach einem der vorhergehenden Ansprüche 4 oder 5, **dadurch gekennzeichnet, dass** das Beheizen der Reaktionszonen (4, 23) durch Verbrennung von Brennstoffen und/oder durch Einsatz elektrischer Energie, insbesondere aus erneuerbaren Energiequellen erfolgt.

7. Verfahren nach einem der vorhergehenden Ansprüche 4 bis 6, **dadurch gekennzeichnet, dass** die Einbauten in den Reaktionszonen (4,23) Wärmerohre sind.

8. Verfahren nach einem der Ansprüche 5 bis 7, **dadurch gekennzeichnet, dass** die Verfahrensschritte c) und d) auch für die zweite Reaktionszone (23) durchgeführt werden.

9. Verfahren nach einem der Ansprüche 5 bis 8, **dadurch gekennzeichnet, dass** der Verfahrensschritt e) auch für die zweite Reaktionszone (23) durchgeführt wird.

10. Verfahren nach einem der vorhergehenden Ansprüche, **dadurch gekennzeichnet, dass** durch die vorbestimmten Temperaturen und Verweilzeiten Kalk oder Dolomit als verschieden gebranntes Endprodukte, wie Weich-, Hart-, und Mittelbrannt, erzeugt werden.

11. Verfahren nach einem der vorhergehenden Ansprüche, **dadurch gekennzeichnet, dass** das Edukt aus agglomerierten Rohmaterialien besteht, die Siliziumdioxid (SiO₂), Aluminiumoxid, eine Eisen-Verbindung, insbesondere Eisen(III)-Oxid sowie Calciumcarbonat und/oder Calciumoxid enthalten.

12. Verfahren nach Anspruch 11, **dadurch gekennzeichnet, dass** das Edukt pelletiert oder brikettiert ist.

13. Verfahren nach einem der Ansprüche 11 bis 12, **dadurch gekennzeichnet, dass** das Edukt einen Wassergehalt bis zu 20 Gew.-% aufweist.

14. Verfahren nach einem der Ansprüche 11 bis 13, **dadurch gekennzeichnet, dass** der Anteil der Schmelze im Edukt in den Reaktionszonen kleiner 20 Gew.-% beträgt.

15. Vorrichtung zur Durchführung des Verfahrens nach einem der vorhergehenden Ansprüche, mit
einem Kalzinierer (2), der einen ersten Reaktorbehälter (3) umfasst, in dem eine erste Reaktionszone (4) als Wirbelschicht oder Fließbett ausgebildet ist, zum Brennen der Edukte,
einer Edukt-Zuleitung (8) in den ersten Reaktorbehälter (3),
einer Dampfleitung (16) in den ersten Reaktorbehälter (3) zur Zuführung von Wasserdampf als Fluidisierungsmedium,
einer Prozesswärme-Erzeugungseinrichtung (6) zur Bereitstellung der für das Brennen der Edukte notwendigen Prozesswärme,
einer Wärmetransfereinrichtung (7) mit Einbauten in der Reaktionszone (4) zur Übertragung der Prozesswärme aus der Prozesswärme-Erzeugungseinrichtung (6) in den ersten Reaktorbehälter (3),
einer Produktableitung (21; 30) zum Ausleiten des Endprodukts aus dem Kalzinierer (2), und
einer Wärmerückgewinnungseinrichtung (32, 36, 40, 48) zur Nutzung der in den heißen Verbrennungs-Abgasen, den heißen Gasen aus dem Kalzinierer (2) und/oder den heißen Zwischen- und Endprodukt aus dem Kalzinierer (2) enthaltenen Wärme zur Vorwärmung des Edukts und/oder des Fluidisierungsmediums.

16. Vorrichtung nach Anspruch 15, **dadurch gekennzeichnet, dass** die Prozesswärme-Erzeugungseinrichtung (6) eine Verbrennungseinrichtung ist, der mittels einer Brennstoffzuführung (18) ein Brennstoff und mittels einer ersten Gaszuleitung (20) ein Oxidationsmittel zuführbar ist, und
dass durch die Wärmerückgewinnungseinrichtung (32, 36, 40, 48) der Brennstoff und/oder das Oxidationsmittel vorwärmbar ist.

17. Vorrichtung nach Anspruch 15 oder 16, **dadurch gekennzeichnet, dass** der Kalzinierer (2) einen zweiten Reaktorbehälter (22) umfasst, in dem eine zweite Reaktionszone (23) zur weiteren thermischen Behandlung, insbesondere Sinterung des Produktes aus dem ersten Reaktorbehälter (3) ausgebildet ist,
dass der erste Reaktorbehälter (3) über eine Zwischenproduktleitung (21) mit dem zweiten Reaktorbehälter (22) verbunden ist, und
dass eine Produktableitung (30) zum Ausleiten des Endprodukts aus dem zweiten Reaktorbehälter (22) vorgesehen ist.

18. Vorrichtung nach einem der Ansprüche 15 bis 17, **dadurch gekennzeichnet, dass** die beiden Reaktionszonen (4, 23) in einem gemeinsamen Reaktorbehälter angeordnet sind.

19. Vorrichtung nach einem der Ansprüche 15 bis 18, **dadurch gekennzeichnet, dass** die Wärmetransfereinrichtung (7) Wärmerohre zum Einkoppeln der Wärme aus Prozesswärme-Erzeugungseinrichtung (6) in den ersten Reaktorbehälter (3) oder den gemeinsamen Reaktorbehälter umfasst.

20. Vorrichtung nach einem der Ansprüche 15 bis 19, **dadurch gekennzeichnet, dass** die Wärmerückgewinnungseinrichtung (32, 36, 40, 48) einen Kondensator (40) zur Kondensation von in dem heißen Gas aus dem ersten Reaktorbehälter (3) enthaltenen Wasserdampfes und der stofflichen Abtrennung von CO₂ aus den heißen Gasen umfasst.

## Claims

1. Method for the production of fired end products from natural, carbonate-containing, granular materials as educt, comprising the following method steps:
a) forming a first reaction zone (4) in the form of a fluidized bed or a fluid bed having the educt and a fluidizing medium;
b) heating the first reaction zone (4) by indirect heat transfer by means of mechanical components in the first reaction zone (4) to at least one or more predetermined temperature ranges over a predetermined dwell time for burning the educt in the first reaction zone (4);
c) discharging, from the first reaction zone (4), hot gases that form in the first reaction zone (4) and contain CO₂ and steam;
d) discharging the hot end product from the first reaction zone (4) after the predetermined dwell time; and
e) use of the heat contained in the hot gases and/or the hot end product from the first reaction zone to preheat the educt and/or the fluidizing medium,
wherein steam is used as fluidizing medium.

2. Method according to any one of the preceding claims, **characterized in that** in the case of the hot gas from the first reaction zone (4), the heat recovery is by condensation of the steam contained in the hot gas, and **in that** a material separation of CO₂ takes place due to the condensation.

3. Method according to claim 2, **characterized in that** the water obtained during the condensation is used again to generate steam for the fluidizing medium.

4. Method according to any one of the preceding claims, **characterized in that** one or more predetermined temperature ranges between 380 °C and 1200 °C can be set in the first reaction zone (4).

5. Method according to any one of the preceding claims, **characterized in that** a second reaction zone (23) is provided in which one or more predetermined temperature ranges between 400 °C and 1600 °C, in particular for sintering, can be set by means of mechanical components.

6. Method according to any one of the preceding claims 4 or 5, **characterized in that** the heating of the reaction zones (4, 23) takes place by burning fuels and/or by using electrical energy, in particular from renewable energy sources.

7. Method according to any one of the preceding claims 4 to 6, **characterized in that** the mechanical components in the reaction zones (4, 23) are heat pipes.

8. Method according to any one of claims 5 to 7, **characterized in that** the method steps c) and d) are carried out also for the second reaction zone (23).

9. Method according to any one of claims 5 to 8, **characterized in that** the method step e) is carried out also for the second reaction zone (23).

10. Method according to any one of the preceding claims, **characterized in that**, by means of the predetermined temperatures and dwell times, lime or dolomite is produced as differently fired end products, such as soft-, hard- and medium-burnt lime.

11. Method according to any one of the preceding claims, **characterized in that** the educt consists of agglomerated raw materials that contain silicon dioxide (SiO₂), aluminum oxide, an iron compound - in particular iron(III) oxide, as well as calcium carbonate and/or calcium oxide.

12. Method according to claim 11, **characterized in that** the educt is pelleted or briquetted.

13. Method according to one of claims 11 to 12, **characterized in that** the educt has a water content of up to 20 wt%.

14. Method according to any one of claims 11 to 13, **characterized in that** the proportion of the melt in the educt in the reaction zones is less than 20 wt%.

15. Device for performing the method according to any one of the preceding claims, comprising
a calciner (2), which comprises a first reactor vessel (3) in which a first reaction zone (4) is formed as a fluidized bed or fluid bed, for burning the educts.
an educt supply line (8) into the first reactor vessel (3),
a steam line (16) into the first reactor vessel (3), for supplying steam as fluidizing medium,
a process-heat generation device (6) to provide the process heat necessary for burning the educts,
a heat transfer device (7) comprising mechanical components in the reaction zone (4) for transferring the process heat from the process-heat generation device (6) into the first reactor vessel (3),
a product discharge line (21; 30) for discharging the end product from the calciner (2), and
a heat recovery device (32, 36, 40, 48) for using the heat contained in the hot combustion exhaust gases, the hot gases from the calciner (2) and/or the hot intermediate and end products from the calciner (2), for preheating the educt and/or the fluidizing medium.

16. Device according to claim 15, **characterized in that** the process-heat generation device (6) is a combustion device to which a fuel can be supplied by means of a fuel supply line (18), and to which an oxidizing agent can be supplied by means of a first gas supply line (20), and
**in that** the fuel and/or the oxidizing agent can be preheated by the heat recovery device (32, 36, 40, 48).

17. Device according to claim 15 or 16, **characterized in that**: the calciner (2) comprises a second reactor vessel (22) in which a second reaction zone (23) is formed for further thermal treatment, in particular sintering of the product from the first reactor vessel (3),
the first reactor vessel (3) is connected to the second reactor vessel (22) via an intermediate product line (21), and
a product discharge line (30) is provided for discharging the end product from the second reactor vessel (22).

18. Device according to any one of claims 15 to 17, **characterized in that** the two reaction zones (4, 23) are arranged in a common reactor vessel.

19. Device according to any one of claims 15 to 18, **characterized in that** the heat transfer device (7) comprises heat pipes for coupling the heat from the process-heat generation device (6) into the first reactor vessel (3) or the common reactor vessel.

20. Device according to any one of claims 15 to 19, **characterized in that** the heat recovery device (32, 36, 40, 48) has a condenser (40) for the condensation of steam contained in the hot gas from the first reactor vessel (3) and for the material separation of CO₂ from the hot gases.

## Revendications

1. Procédé de fabrication de produits finis calcinés à partir de substances granulaires, naturelles contenant du carbone comme produit de départ, comprenant les étapes de procédé consistant à :
a) former une première zone de réaction (4) sous la forme d'une couche fluidisée ou d'un lit fluidisé avec le produit de départ et un milieu de fluidisation ;
b) chauffer la première zone de réaction (4) par transfert de chaleur indirect au moyen d'éléments encastrés dans la première zone de réaction (4) à au moins une ou plusieurs plages de températures prédéterminées sur un temps de séjour pour calciner le produit de départ dans une première zone de réaction (4) ;
c) évacuer les gaz chauds générés dans la première zone de réaction (4), qui contiennent du CO₂ et de la vapeur d'eau, de la première zone de réaction (4) ;
d) évacuer le produit fini chaud de la première zone de réaction (4) après le temps de séjour prédéterminé ; et
e) utiliser la chaleur contenue dans les gaz chauds et/ou le produit fini chaud de la première zone de réaction pour préchauffer le produit de départ et/ou le milieu de fluidisation,
dans lequel de la vapeur d'eau est utilisée comme milieu de fluidisation.

2. Procédé selon l'une quelconque des revendications précédentes, **caractérisé en ce que** dans le cas du gaz chaud de la première zone de réaction (4) la récupération de chaleur s'effectue par condensation de la vapeur d'eau contenue dans le gaz chaud et **en ce qu'**une séparation de substances du CO₂ s'effectue par la condensation.

3. Procédé selon la revendication 2, **caractérisé en ce que** l'eau obtenue lors de la condensation est réutilisée pour produire de la vapeur d'eau destinée au milieu de fluidisation.

4. Procédé selon l'une quelconque des revendications précédentes, **caractérisé en ce qu'**une ou plusieurs plages de températures prédéterminées comprises entre 380 °C et 1200 °C peuvent être réglées dans la première zone de réaction (4).

5. Procédé selon l'une quelconque des revendications précédentes, **caractérisé en ce qu'**une seconde zone de réaction (23) est prévue dans laquelle au moyen d'éléments encastrés une ou plusieurs plages de températures prédéterminées comprises entre 400 °C et 1600 °C, en particulier pour le frittage, peuvent être réglées.

6. Procédé selon l'une quelconque des revendications précédentes 4 ou 5, **caractérisé en ce que** le chauffage des zones de réaction (4, 23) s'effectue par combustion de combustibles et/ou par utilisation d'énergie électrique, en particulier à partir de sources d'énergie renouvelables.

7. Procédé selon l'une quelconque des revendications précédentes 4 à 6, **caractérisé en ce que** les éléments encastrés dans les zones de réaction (4, 23) sont des caloducs.

8. Procédé selon l'une quelconque des revendications précédentes 5 à 7, **caractérisé en ce que** les étapes de procédé c) et d) sont également réalisées pour la seconde zone de réaction (23).

9. Procédé selon l'une quelconque des revendications 5 à 8, **caractérisé en ce que** l'étape de procédé e) est également réalisée pour la seconde zone de réaction (23).

10. Procédé selon l'une quelconque des revendications précédentes, **caractérisé en ce que** du calcaire ou de la dolomite sont produits en tant que différents produits finis calcinés, tels que calcination lente, moyenne et vive, par des températures et des temps de séjour prédéterminés.

11. Procédé selon l'une quelconque des revendications précédentes, **caractérisé en ce que** le produit de départ se compose de matières premières agglomérées, qui contiennent du dioxyde de silicium (SiO₂), de l'oxyde d'aluminium, un composé de fer, en particulier de l'oxyde de fer(III), ainsi que du carbonate de calcium et/ou de l'oxyde de calcium.

12. Procédé selon la revendication 11, **caractérisé en ce que** le produit de départ est granulé ou briqueté.

13. Procédé selon l'une quelconque des revendications 11 à 12, **caractérisé en ce que** le produit de départ présente une teneur en eau allant jusqu'à 20 % en poids.

14. Procédé selon l'une quelconque des revendications 11 à 13, **caractérisé en ce que** la proportion de la masse fondue du produit de départ dans les zones de réaction est inférieure à 20 % en poids.

15. Dispositif de réalisation du procédé selon l'une quelconque des revendications précédentes, comprenant
un calcinateur (2), qui comporte une première cuve de réacteur (3), dans lequel une première zone de réaction (4) est conçue comme couche fluidisée ou lit fluidisé pour calciner les produits de départ,
une conduite d'alimentation de produit de départ (8) dans la première cuve de réacteur (3),
une conduite de vapeur (16) dans la première cuve de réacteur (3) pour l'alimentation de vapeur d'eau en tant que milieu de fluidisation,
un dispositif de production de chaleur de processus (6) pour la fourniture de chaleur de processus nécessaire à la calcination des produits de départ,
un dispositif de transfert de chaleur (7) avec des éléments encastrés dans la zone de réaction (4) pour le transfert de chaleur de processus du dispositif de production de chaleur de processus (6) dans la première cuve de réacteur (3),
une conduite d'évacuation de produit (21 ; 30) pour évacuer le produit fini du calcinateur (2), et
un dispositif de récupération de chaleur (32, 36, 40, 48) pour l'utilisation de la chaleur contenue dans les gaz d'échappement de combustion chauds, les gaz chauds du calcinateur (2) et/ou les produits intermédiaires et finis chauds du calcinateur (2) pour préchauffer le produit de départ et/ou le milieu de fluidisation.

16. Dispositif selon la revendication 15, **caractérisé en ce que** le dispositif de production de chaleur de processus (6) est un dispositif de combustion qui peut être alimenté au moyen d'un système d'alimentation en combustible (18) en combustible et au moyen d'une première conduite de gaz (20) en agent oxydant, et **en ce que** le combustible et/ou l'agent oxydant peut(-vent) être préchauffé(s) par le dispositif de récupération de chaleur (32, 36, 40, 48).

17. Dispositif selon la revendication 15 ou 16, **caractérisé en ce que** le calcinateur (2) comporte une seconde cuve de réacteur (22), dans laquelle une seconde zone de réaction (23) est conçue pour le traitement thermique ultérieur, en particulier le frittage du produit émanant de la première cuve de réacteur (3),
**en ce que** la première cuve de réacteur (3) est reliée par l'intermédiaire d'une conduite de produit intermédiaire (21) à une seconde cuve de réacteur (22), et
**en ce qu'**une conduite d'évacuation de produit (30) est prévue pour évacuer le produit fini de la seconde cuve de réacteur (22).

18. Dispositif selon l'une quelconque des revendications 15 à 17, **caractérisé en ce que** les deux zones de réaction (4, 23) sont disposées dans une cuve de réacteur commune.

19. Dispositif selon l'une quelconque des revendications 15 à 18, **caractérisé en ce que** le dispositif de transfert de chaleur (7) comporte des caloducs pour coupler la chaleur du dispositif de production de chaleur de processus (6) dans la première cuve de réacteur (3) ou la cuve de réacteur commune.

20. Dispositif selon l'une quelconque des revendications 15 à 19, **caractérisé en ce que** le dispositif de récupération de chaleur (32, 36, 40, 48) comporte un condensateur (40) pour la condensation de la vapeur d'eau contenue dans le gaz chaud de la première cuve de réacteur (3) et la séparation des substances du CO₂ des gaz chauds.
